# EUROPEAN PATENT APPLICATION

(11) **EP 2 042 986 A1**
(43) Date of publication of application: **01.04.2009**
(21) Application number: 07018631.7
(22) Date of filing: 21.09.2007
(51) Int. Cl.: G06F 9/445

(54) **Method and system for execution of a service-related process**

(71) Applicant: Nokia Siemens Networks Oy, 02610 Espoo (FI)
(72) Inventor: Andrade, Elvio, 2820-235 Charneca de Caparica (PT); Arsenio, Artur, Queijas 2795 Queijas (PT); Ferreira, Herve, 2695-285 Portela de Azoia (PT); Wischy, Markus, 81739 München (DE)
(74) Representative: Bruglachner, Thomas E.

(57) **Abstract**

A method of executing a service related process comprises providing a process workflow (116, 216, 316, 416) defining said service related process, said process workflow (116, 216, 316, 416) specifying execution of at least one executable component (113, 213, 313, 413). The method further comprises executing said process workflow (116, 216, 316, 416) with a workflow engine (114). According to illustrative embodiments, the process workflow (116, 216, 316, 416) may be service agnostic, i.e. agnostic of the service to which the process workflow (116, 216, 316, 416) is related and/or may be protocol agnostic i.e. agnostic of a specific protocol used by the service to which the process workflow (116, 216, 316, 416) is related. According to other illustrative embodiments, the process workflow (116, 216, 316, 416) describes core processes of a service system.

## Description

### Field of invention

The present invention relates to the field of service related processes. In particular the invention relates to a method of executing a service related process and a service system which provides a service.

### Art Background

In known service systems services are directly implemented on a service platform, e.g. in an appropriate programming language like JAVA, etc. Further protocols for delivery of services are directly implemented on the platform. Hence for providing a new service, there will be a direct interaction of the new service with the platform components and the delivery protocols in order to provide the new service. For example, if a new service needs a new delivery protocol, the delivery protocol has to be available on the platform and the service has to be programmed to interact with the protocol provided by the platform.

There may be a need for a more flexible service systems which overcomes at least some of the aforementioned problems.

### Summary of the Invention

This need may be met by the subject matter according to the independent claims. Advantageous embodiments of the present invention are described by the dependent claims.

According to a first aspect of the invention there is provided a method of executing a service related process. The method comprises providing a process workflow which defines said service related process, wherein said process workflow specifies execution of at least one executable component. The process workflow is executed with a workflow engine.

This aspect of the invention is based on the idea that a service related process is decoupled in high-level and low-level processing structures. Accordingly, each architecture's component implementation and in particular each core component implementation of the architecture is divided into a workflow process description which describes a workflow of the process on a high level and at least one executable component on a low level.

An advantage thereof is that it is easy to update or change service related processes without requiring efforts to modify the platform. The service related process may be running in a distributed way, at several places. Also a service deployed on by a service related process may be deployed so as to run in a distributed way at several places.

The term "service related process" used herein may be any process that is related to a service. For example, a service related process may be a service that can be subscribed by a client. According to other embodiments, a "service related process" may be a deployment of a new service on a service platform. According to still another embodiment, a service related process may be undeployment of the respective service. According to other embodiments, a "service related process" may be a subscription of a service provided by a service platform. In this context, a service may be e.g. a service that is accessible by a user.

The executable component may be a directly executable file, an interpretable script, etc., which may be executed on a respective service system. An executable component may be a process specific executable component which is added to the system in course of the service related process. According to another embodiment, an executable component may be an executable core component that is used by plural service related processes. For instance, a service related process may specify execution of a process specific executable component as well as execution of one or more executable core components. An executable component may define an application or a part of an application. Further, an executable component may be a protocol manager, etc.

According to an embodiment, "providing said process workflow" comprises providing a message package which comprises said process workflow and metadata identifying said service related process. The metadata may e.g. include a process name of said service related process. According to another embodiment, the message package comprises at least one of said at least one executable component. Hence, according to an embodiment, a message package includes an executable component, a process workflow which specifies execution of the executable component and metadata. For instance, the message package may include a process specific executable component and the process workflow may specify execution of the process specific executable component as well as execution of an executable core component which is already available on the service system.

According to an embodiment, a service related process is a core process of a service system which provides a core functionality of the service system. For instance, a core functionality may be called by a service which has already been deployed on the service system. For instance, a core functionality may be the functionality of a protocol manager. Accordingly, an executable core component may be a protocol manager. Another example of a core functionality is a functionality which is called during deployment of a service on the service system. An example of such a core functionality is the delivery of software into a subsystem, etc.

It should be noted that herein the term "software deployment" embraces part or all activities that make a software available for use. Hence, "software deployment" may embrace at least one of installation, activation, adaption of the respective software.

According to an embodiment there is provided a method further comprising providing at least one of said at least one executable component to the subsystem. According to another embodiment, said service related process provides at least one of the following: adding to a service system a component that manages delivery of software into a sub-system; adding to a service system a component that manages removal of software from a sub-system. A subsystem may be for example a local subsystem or a remote subsystem. The software which is delivered to the subsystem may be part of a service. Hence, a service may be a locally running service (local service), a remotely running service (remote service, or a service that runs in part locally and in part remote (hybrid service).

According to another embodiment, at least one of said at least one executable component is a protocol manager for providing at a predetermined protocol for transfer of said component. Hence, deploying a service or a part of a service may include deploying a protocol manager providing a predetermined delivery protocol for delivering the service to the subsystem. According to another embodiment, the software delivered to said sub-system further is agnostic of an implementation of said protocol. According the still another embodiment, the software further complies with said protocol although being agnostic of the implementation of the protocol.

The software (SW) delivered by a protocol manager has to be implemented in a way complying with the same protocol as that of the protocol manager. One special kind of protocol manager is a generic manager, which deploys binaries without having to comply with any specific protocol. For this component, software deployed is completely agnostic to the component.

According to an embodiment, the service related process provides at least one of: adding to a service system a service that can be subscribed by subscribers; removal of a service from a service system; delivery of a service to a subscriber; removal of a service from a subscriber.

It should be noted that "subscribing" a service does not require an action of a user that is explicitly denoted as subscription. Rather in the sense of the embodiment stated above, subscription of a service is explicitly or implicitly carried out in any case before a service is delivered to a client.

According to a further embodiment, the service related process is agnostic of said service to which it is related. For example, reciting one of the above mentioned examples, a service related process may add a service to a service system that can be subscribed by subscribers wherein the service related process, i.e. the process of "adding" the service to the service system, is agnostic of the service. This embodiment illustrates an advantage of the subject matter disclosed herein.

According to another embodiment, a method is presented, wherein the service related process comprises deploying at least a part of a service on a service system by providing a process workflow executable by a workflow engine, wherein the process workflow defines execution of at least one executable component. Deploying at least a part of a service includes deploying a new service as well as updating an existing service.

According to still another embodiment, there is provided a method which further comprises providing at least one of said at least one executable component in the course of deploying said service. For example a new executable component which is not already contained in the service system may be provided before, in parallel or after deploying a process workflow defining execution of the new executable component.

According to still another embodiment, there is provided a method wherein the process workflow references at least one metadata component related to said process workflow. Metadata components may be e.g. stored on a service platform, stored in another component of a service system or may be distributed over a service system.

According to still another embodiment, there is provided a method wherein the process workflow is provided in terms of state machines. For example, processes of the process workflow may be described declaratively as state machines, defined in a standard manner by nodes, transitions, actions, variable assignments. Accordingly, the workflow engine may be configured to execute the state machines, thereby providing the service defined by the process workflow. The state machines may be defined, for example, as XML files, through JAVA objects or as a record in a workflow engine database.

It should be noted that "deploying at least a part of a service" does not exclude the usage of the respective part of a service or the whole service by another entity and in particular by another process workflow of another service or service related process. In particular a protocol manager provided in the service system may be usually executed by several process workflows which use the respective protocol defined by the protocol manager.

According to a further embodiment, there is provided a method which comprises providing a service to a client by carrying out a respective process workflow. The process workflow is executable by the workflow engine. According to an embodiment, at least one of said at least one executable component is a protocol manager providing a predetermined delivery protocol supported by said client.

According to a second aspect of the invention, a computer program product is presented which enables at least one processor to carry out the method according to the first aspect of the invention or an embodiment thereof.

According to a third aspect of the subject matter disclosed herein, a service system for providing a service is provided. The service system comprising an executable component, a process workflow defining a process related to said service and defining execution of said executable component and a workflow engine capable of executing said process workflow to provide said service related process.

According to an embodiment, the service related process is a core process of the service system.

According to another embodiment, said service related process provides at least one of the following: adding to a service system a component that manages delivery of software into a sub-system; adding to a service system a component that manages removal of software from a sub-system; adding to a service system a service that can be subscribed by subscribers; removal of a service from a service system; delivery of a service to a subscriber; removal of a service from a subscriber.

According to still another embodiment, at least one executable component is a protocol manager providing a predetermined delivery protocol for delivering the service to a subsystem. By providing protocol managers as executable components in the framework defined by the subject matter disclosed herein, new delivery protocols may be implemented in the platform simply by adding the respective protocol manager as an executable component. Existing process workflows may be updated to use the newly added delivery protocol by specifying the new protocol manager for delivery of a service instead of, or maybe in addition to, the presently used protocol manager. Such an update may be performed without changing the platform itself but only by adding and/or replacing components, e.g. files, in the service system. Such changes in the service system may include adding and/or replacing components on the platform and/or a client side.

According to still another embodiment, the service related process is agnostic of at least one executable component. For example, the service related process may be agnostic of a protocol manager.

According to still another embodiment, said service related process is agnostic of said service.

According to still another embodiment, the service system may include at least one of a backend component of a service provider, e.g. a backend middleware; a backend component of an operator, e.g. of a telecommunications operator; a client component, e.g. a home component of a user, e.g. a home set-top box, a home gateway, a user interface framework, e.g. of a web interface, of a mobile device, etc. According to an embodiment, the service components, in particular the process workflow and the executable components are provided and executed only in a backend middleware. For example, according to still other embodiments the service components may be distributed over several entities, e.g. a backend middleware and home components.

According to other embodiments of the invention, services provided by a service platform, e.g. a backend middleware, may easily be added by only providing a new process workflow and, if not already available, providing respective executable components necessary to run the service, without requiring any changes on the service platform itself.

According to another embodiment, providing a "process workflow defining a service related process" includes providing metadata of the service related process. According to an embodiment, the metadata and the process workflow are provided in a single data package.

The service system may provide one or more workflow portions which may be reused by several services deployed on the service platform. This may increase efficiency of providing new services. Further reusable workflow portions may reduce the likelihood of bugs in the services deployed.

In the following there will be described exemplary embodiments of the various aspects of present invention with reference to a service system. It has to be pointed out that of course any combination of features relating to different subject matters is also possible.

It has to be noted that embodiments of the invention have been described with reference to different subject matters. In particular, some embodiments have been described with reference to apparatus type claims whereas other embodiments have been described with reference to method type claims. Further, some embodiments have been described with reference to a deployment method whereas other embodiments have been described with reference to a service subscription method or an service access method. However, a person skilled in the art will gather from the above and the following description that, unless other notified, in addition to any combination of features belonging to one type of subject matter also any combination between features relating to different subject matters, in particular between features of the apparatus type claims and features of the method type claims is considered to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows schematically the structure of a service according to an embodiment of the invention;
Figure 2 shows schematically a middleware component of a service system in accordance with another embodiment of the invention;
Figure 3 shows schematically a service system in accordance with an still another embodiment of the invention;
Figure 4A shows schematically a service system in accordance with still another embodiment of the invention;
Figure 4B shows schematically a message package used by the service system of Fig. 4A;
Figure 5A shows schematically a service system in accordance with still another embodiment of the invention;
Figure 5B shows schematically a message package used by the service system of Fig. 5A;
Figure 6 shows schematically a service system in accordance with still another embodiment of the invention;
Figure 7 shows schematically deployment of a service in accordance with still another embodiment of the invention;
Figure 8 shows schematically a deployment workflow for deploying a service in accordance with still another embodiment of the invention;
Figure 9 shows schematically subscription of a service in accordance with still another embodiment of the invention;
Figure 10 shows schematically a subscription workflow for deploying a service in accordance with still another embodiment of the invention.

### Detailed Description

The illustration in the drawings is schematic. It is noted that in different figures, similar or identical elements are provided with the same reference signs or with reference signs, which are different from the corresponding reference signs only within the first digit.

Embodiments of the invention aim proposing a method of executing a service related process, the method comprising providing a process workflow defining the service related process wherein the process workflow specifies execution of at least one executable component, and, executing the process workflow with a workflow engine.

Examples of services provided by illustrative embodiments of the invention include, but are not limited to: Voice over IP services; Internet services; 3rd party surveillance services; 3rd party traffic info services; home entertainment services such as personal video recorder services (PVR), internet protocol TV (IPTV) services, video telephony services, or video on demand services; Home control services; Home security services; Healthcare services; video-call application services; etc.

Examples of executable components include, but are not limited to: Remote access management; business support systems (BSS); operating support systems (OSS); service deployment; service subscription; subscriber management; subscription management; operator management; service provider management; 3rd party applications; software deployment management; Low level management; one or more software delivery managers; etc.

A service related process may be any process that is related to a service. For example, a service related process may be a service itself. Further, a service related process may be deployment of a service. Further, a service related process may be undeployment of a service.

Embodiments of the invention aim proposing a new service deployment/delivery mechanism which is agnostic to the specific details of the service implementation, describing a means to specify process flows at a higher, e.g. a more coarse level. For example, according to an embodiment, process flows are specified as state machines and business logic operations may be specified at each node of these state machines as a software implementation in executable components, e.g. binaries, and metadata. For instance, the executable components and metadata may be stored on an application server, e.g. in a JAVA platform, .NET framework, etc, or combinations thereof.

Illustrated embodiments intend to provide an innovative middleware system which offers core services to service providers but being simultaneously independent to a service implementation.

According to an embodiment of the invention, a service to be deployed on the middleware is not implemented directly as a workflow process. According to another embodiment, no service to be deployed on the middleware is implemented directly as a workflow process. According to an illustrative embodiment, a workflow engine is solely employed to orchestrate the execution of middleware services and in particular middleware core services at a higher level of flow execution so that these core services offered by a service deployment platform are completely agnostic to the implementation of the services deployed through it.

According to an embodiment of the invention, a mechanism is proposed according to which services are deployed by introducing dynamically the flows that define a service together with the executable components (e.g. binaries) that define the service execution. According to an embodiment, a mechanism is proposed according to which services are deployed by introducing dynamically the metadata and flows that define a service together with the executable components (e.g. binaries) that define the service execution.

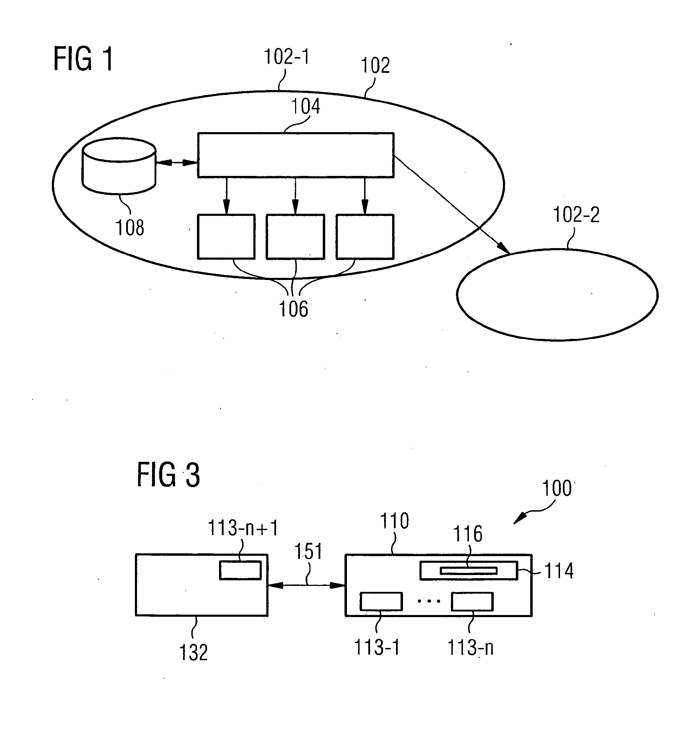

Figure 1 shows schematically the structure of services according to an embodiment of the invention. A service 102 is defined by a workflow description 104, executable components 106 and related metadata 108. A service, e.g. the service 102-1 in Figure 1 may call one or more second services 102-2, one of which is illustrated in Fig. 1. One or more of the service 102, 102-1, 102-2 may be a user deployed service. One or more of the service 102, 102-1, 102-2 may be a core service of a service system.

With the structure illustrated in Fig. 1, according to an embodiment, service agnosticism is accomplished as follows, according to the proposed architecture:

Upon deployment, a service provider (SP) or an operator deploys a set of files, e.g. XML, or in any other format, describing the service flows for subscription and un-subscription.

The service provider/operator deploys as well metadata which may be distributed over several components of the middleware or may be stored in a database accessible by the respective components.

Executable components, e.g. binaries, may be deployed by downloading the binary files by the middleware component from the uniform resource locator (URL) provided by the service provider. However, it is to be understood that any other method of providing the executable components may be suitable. For example, they may be provided from a CD, a DVD. Instead of downloading or copying, i.e. storing the executable components itself, a link to the executable components may be stored. The executable components might also run on a service providers premises or elsewhere, without the requirement for a download. Further any other method of making the executable components available at runtime may be appropriate.

It should be noted that the above mentioned deployment is independent of service details - it does not matter whether the service is a video on demand service or a Karaoke service.

Dynamic changes or updates to a service are possible by having the service provider deploying new workflow descriptions, metadata, binaries, etc. by adding sub-flows that can be called by the original flows to execute extra steps, including enabling the execution of extra binary code.

A workflow description may be of any type that can be executed by a respective workflow engine. As indicated above, according to an embodiment of the invention, state machines are used to model the process workflow in a service enabling platform at an operator's backend infrastructure. A workflow engine is used to execute such flows, orchestrating as well the business logic. A workflow engine is not an object of the invention, since a wide variety of such mechanisms is currently available in the market, such as JBpm from JBoss, JBoss rules, or Twister. The workflow engine is however responsible for the execution flow of all the main processes described declaratively as state machines - defined in a standard way by nodes, transitions, actions, variable assignments - that the middleware will have to execute.

The state machines or other process workflow definition scheme may either be defined as XML files, through JAVA objects or as a record in a workflow engine database.

The middleware system is decoupled in high level and low level processing structures, so that each architecture's component business logic implementation is divided into:
- a workflow process description, which consists of state machines describing high-level flows. At each node of these state machines, or optionally at each transition, an action is triggered that will execute a portion of a low level component implementation; and
- a low level component implementation, such as JAVA beans.

For the presentation of the system to user, one or more application programming interfaces (API) may be provided.

For example, the presentation layer may be divided into:
- an external API to trigger the initial state of the flow descriptions;
- an internal API for the workflow engine to call actions on the low-level implementation at each node of the state machine;
- an optional external API to access directly the low-level implementation without triggering the workflow engine. This optional feature adds more flexibility by allowing different components to use or not use the workflow motor.

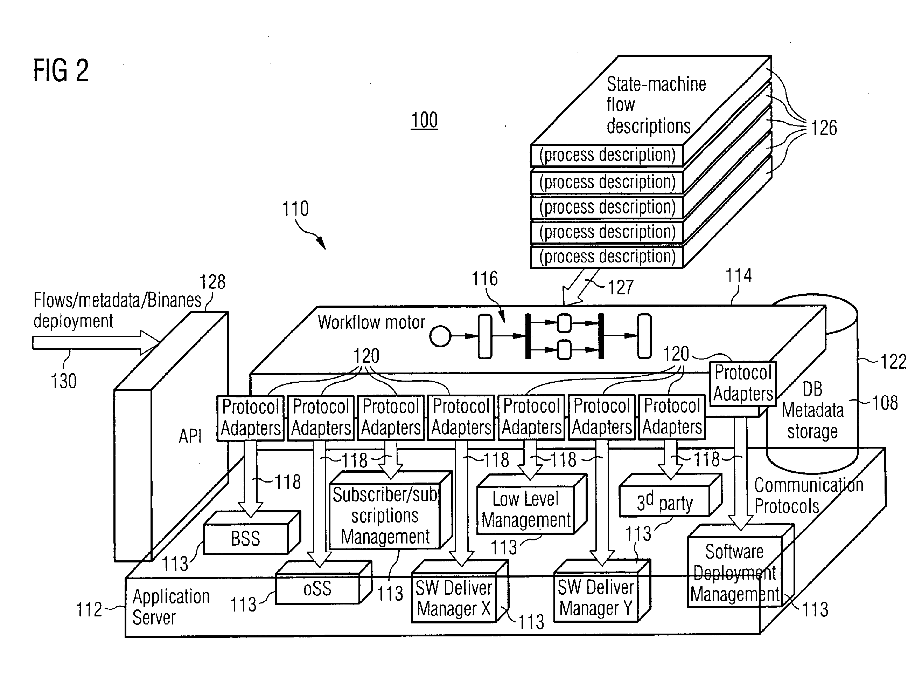

An exemplary embodiment of a middleware component 110, e.g. in a service-providers backend, is shown in Fig. 2.

The middleware component 110 comprises an application server 112 providing a plurality of executable components 113 in the form of applications which may be accessed by workflows. A workflow engine 114 is provided which is capable of executing a process workflow exemplarily illustrated at 116 in Fig. 2. The process workflow 116 specifies execution of at least one of the applications provided by the application server 112, e.g. by respective calls 118. For example, the workflow 116 may specify the condition on which an application 113 is executed and the parameters which are submitted to the application 113. An executable component 113 may return a return value to the workflow (not shown in Fig. 2). It should be noted that the executable components 113 provided in Fig. 2 and the executable components mentioned above are provided only for illustrative purposes. Depending on the particular system, other systems may have e.g. added executable components in excess to these shown in Fig. 2 while other systems may have removed some of the executable components 113 shown in Fig. 2. Still other systems may comprise completely different executable components compared to the ones in Fig. 2.

It should be noted that executable components may be provided only for a single service related process or may be provided for a plurality of service related processes. For example, standard executable components relating to standard (core) processes may be provided for all kinds of service related processes or services. Such standard executable components, e.g. components defining subscription of a service, service deployment, etc. may be provided e.g. by a service provider.

According to an embodiment, one or more, for example all of the executable components 113 may include a service adaptor or a protocol adaptor 120 which provides an interface between the respective executable component 113 and the flow engine 114.

According to an embodiment, a database 122 for storing metadata 108 of the process workflow 116 or metadata 108 of the executable components 113 may provided. According to other embodiments, the metadata 108 may be distributed over the individual components on the application server. Metadata 108 may be for example state machine definitions for at least part of or all operations that are supported. Metadata 108 may further include data which identify the respective service related process.

While only one process workflow 116 is illustrated in Fig. 2, it should be understood that usually the workflow engine 114 will be capable of executing a plurality of workflows 116, either in a more or less parallel manner or sequentially.

The process workflow 116 may comprise one or more state-machine flow descriptions 126, e.g. process descriptions of individual processes contained in the process workflow 116. According to an embodiment, the at least one flow description 126 is made available to the process workflow 116, indicated by the arrow 127 in Fig. 2.

In the illustrated embodiment, the middleware component 110 further comprises an application programming interface (API) 128 for deployment of components of the service related process (process components) like process workflows 116, metadata 108 and executable components 113. The deployment of the process components 113, 116 and 124 may be performed by inputting respective inputs 130, including user inputs, inputs from other system components, etc, to the API 128.

It should be noted that the embodiment of Fig. 2 is provided only for illustrating some aspects of illustrated embodiments of the subject matter disclosed herein. For example, as shown in Fig. 3, a service system 100 may include a middleware component 110 comprising a number of n executable components 113-1, ..., 113-n. In addition, at least one executable component, e.g. one executable component 113-n+1 may be stored a subsystem 132, e.g. service subscriber device (client) such as a home set-top box. Upon execution of a process workflow 116 in the workflow engine 114, one or more of the executable components 113-1, ..., 113-n in the middleware component 110 as well as the executable component 113-n+1 in the subsystem 132 may be executed. Communication between the client 132 and the middleware component 110 may be performed over any appropriate connection 151, e.g. via internet, via a telecommunication service, e.g. an Integrated Services Digital Network (ISDN), via a local area network (LAN) wireless via Global System for Mobile communications (GSM), via a Universal Mobile Telecommunications System (UMTS), via a wireless local area network (WLAN), etc.

Hence, as illustrated basically in Fig. 3, a service system 100 according to the present invention may represent a distributed process definition/execution scheme of a service related process. It should be noted that even adding a distributed service related process as shown in Fig. 3 does not require changes on the service providers's infrastructure, since all necessary changes in actions to be taken may be implemented by a respective process workflow 116 and respective executable components 113-1, ..., 113-n, 113-n+1 or additional executable components.

The middleware platform as described with regard to the embodiments in Fig. 2 and Fig. 3 may support a large number of services, e.g. hundreds or even thousands of services.

The invention and in particular the middleware platform described above offers the possibility to deploy in the future any arbitrary new service.

The management or orchestration is achieved declaratively through the state machines that define the workflow processes and any change in the flow or in the entities invoked in the process is performed through this same mechanism.

In the described solution it is easy to change or update services without requiring efforts to modify the platform. In particular in the above mentioned embodiments, it is not necessary to adapt the application server 112, the database 122, the workflow motor 114 or the application programming interface 128 to a particular service or service component 113, 116, 124.

According to illustrative embodiments, the platform 112, 114, 122, 128 is independent from the service implementation language, protocols, etc.

As illustrated in Fig. 3, the platform 112, 114, 122, 128 is not only independent from the service implementation, but also from a distributed architecture of the service. In other words, the solution works for services running on a service providers backend or on an operators backend, on home components such as set-top boxes, home gateways, on mobile components such as cellulars, or distributed over at least two of the aforementioned components.

Services deployed by a platform can take advantage of core services offered by the platform, e.g. OSS, BSS, subscription, etc.

The proposed solution facilitates and enables service aggregation.

The proposed solution offers the flexibility in the entity deploying a service. For example, a service may be deployed by an operator or by a service provider, etc. Hence the proposed embodiment is a truly open platform for the integration of services.

In the following other embodiments of the invention will be described having focus in particular on protocols which are involved e.g. upon deploying, subscription and delivery of a service.

Delivery of home entertainment services, e.g. video on demand, IPTV (IPTV = internet protocol television), gaming may be performed using e.g. the GEM protocol (GEM = Globally Executable MHP, MHP = Multimedia Home Platform). Other protocols may also support smart home services, such as home security, home vigilance, for instance according to the Open Services Gateway initiative (OSGi) protocol and depending on the service. In addition, user interface views - such as the views for service user interfaces - have to be deployed as well, and these might come in a set of different technologies such as user interface plugins and user interface framework for .NET, OSGi, service faces, or any other technology.

Regarding these circumstances, embodiments of the invention allow integration of any existing or future protocol for any existing or future service.

In particular, according to an embodiment of the invention, a protocol agnostic service deployment platform is provided.

Exemplary embodiments related hereto are described with regard to two flexible processes: One process for deploying, e.g. for adding software to the platform, e.g. to the backend, and another process for subscribing services, e.g. to install software that was bought by a subscriber on a client so that the respective service is available to the client. As already discussed above, other embodiments involve the storage of a link to the respective software on the client instead of installing the software on the client.

Service related processes are controlled by a workflow control system on an operators middleware. According to other embodiments, the workflow control system may be located on an arbitrary component of the service system which includes a client and a service providers infrastructure providing a desired service for the client.

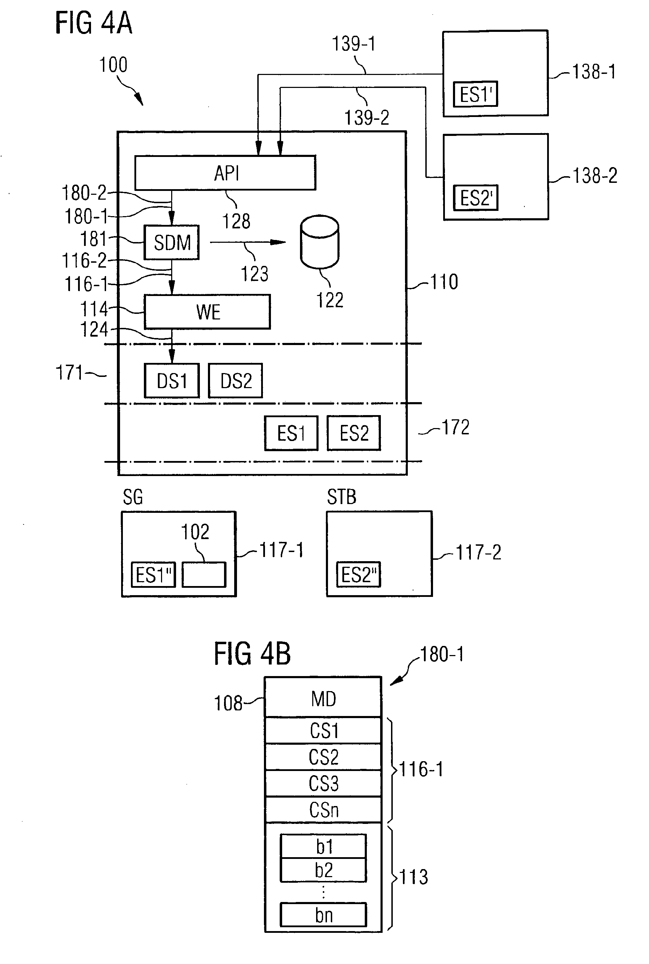

With regard to Fig. 4A to Fig. 5B some details of illustrative embodiments of a service agnostic service system as well as of a protocol agnostic service system are discussed. It should be noted that these details, where applicable, can be realized in conjunction with each other and with any other embodiment disclosed herein.

Fig. 4A shows a service system 100 according to illustrative embodiments. The service system 100 provides a service related process, e.g. deployment of a service, which is agnostic of the service. A service related process of this kind may be agnostic in at least one of "technology, implementation, behaviour, etc." The main use cases of a service agnostic, service related process are:
- Definition and removal of services, e.g. in an operator's backend; according to an embodiment, in this use case the respective service related process may be performed by the operator's backend, whereas according to another embodiment in this use case the respective service related process may be performed by a service provider.

The service system 100 of Fig. 4A comprises a middleware component 110, e.g. an operator's backend. The middleware component 110 comprises an application programming interface (API) 128, via which service related process can be implemented in the service system 100. According to an embodiment, a service related process is deployed by a service provider component 138-1, 138-2. For instance, a first service provider component 138-1 may provide process information 139-1 of a first end-user service to the API 128 which in response hereto provides a respective message package 180-1 to a service delivery manager (SDM) 181 which handles the message package 180-1.

Fig. 4B schematically shows a message package 180-1 in accordance with illustrative embodiments of the subject matter disclosed herein. According to an embodiment, the message package 180-1 comprises a process workflow 116-1 which defines the respective service related process, e.g. deployment of a service, as well as metadata 108 that identify the service related process. The flow 116-1 may reference core services CS1, CS2, CS3, ... CSn that can be accessed by the respective service provider, i.e. by the service provider component 138-1 in the depicted example. According to other embodiments, the core services CS1, CS2, CS3, ..., CSn may be included in the message package 180-1. According to another embodiment, the message package 180-1 further includes at least one executable component 113, e.g. binaries b1, b2, ... bn. The at least one executable component 113 may be a component to be handed over, indicated at 124, to a distribution service DS1.. The distribution service DS1 is a component which manages delivery of software into a subsystem. According to an embodiment, the destination services are defined at a distribution service level 171 of the middleware component 110. Further, an executable component may be a component to be run in the middleware component 110 which, in an illustrative embodiment, may represent an operator's backend infrastructure. Further, an executable component may be a component to be run in a subsystem, e.g. in a service provider's component 138-1 or in end-user device. Further, an executable component may be a component which runs in part in the middleware component 110 and in part in a subsystem (hybrid scenario). According to another embodiment, the at least one executable component 113, as a part of the service related process, is stored in the respective local file system.

The service delivery manager 181 handles the message package 180-1. For instance, the service delivery manager 181 may add the process workflow 116-1 to the workflow engine 114. The process workflows 116-1 is executed in the workflow engine 114 of the service system 100 to thereby provide the desired service related process, i.e., in the example of Fig. 4A, deployment of a respective service in the service system 100. The process workflow 116-1 may define storing locations, e.g. one ore more subsystems, for the executable components 113 contained in the message package 180-1.

According to an illustrative embodiment, the workflow engine 114 is part of the middleware component 110, as shown in Fig. 4A. According to other embodiments, the workflow engine may be a separate component or may be integrated in another component of the service system.

The service delivery manager 181 may access, indicated at 123, a metadata storage 122, to store and/or retrieve metadata 108 of the respective service related process 116-1. According to other embodiments, the metadata storage 122 may be accessed by the workflow engine 114.

According to an illustrative embodiment, the service related process is the deployment of a hybrid service which has components that run two or more subsystems, e.g. in the middleware component 110, in a service gateway SG, in a set-top box STB, in a service provider's infrastructure 138-1, etc. In the example shown in Fig. 4A, the service deployed by the service related process comprises three service parts ES1, ES1', ES1'' which run in different subsystems. In particular, a first component ES1 runs in the middleware component 110, e.g. at an end-user service level 172; a second component ES1' runs in the service provider component 138-1; and a third component ES1'' runs in an end-user device 117-1 in the form of a service gateway (SG), e.g., according to an illustrative embodiment, of a home control system. It should be understood that each subsystem may have more than one service part ES1, ES1', ES1'' running on it.

According to other illustrative embodiments, the service to be deployed by the first service related process is a network service that runs in only one remote subsystem. According to still other embodiments, the service to be deployed is a local service that runs only locally.

A second service provider component 138-2 may provide process information 139-2 of a second end-user service to the API 128 which provides a respective message package 180-2 to the service delivery manager 181 which handles the message package 180-2. The message package 180-2 may be of similar structure as the message package 180-1 shown in Fig. 4B. Further, the message package 180-2 may be handled e.g. as explained with regard to the message package 180-1. The workflow engine 114 executes the flow defined in the respective message package 180-2, similar to the as explained with regard to the first service related process. As a result, a second hybrid service is deployed with a first service part ES2 running in the middleware component 110, with a second service part ES2' running in the service provider's component 138-2 and with a third service part ES2" running in an end-user device 117-2 in the form of a set-top box (STB).

According to an illustrative embodiment, no communication protocol is specified for communication between the service binaries 113. Rather, the service binaries 113 are invoked by the process flow 116-1, 116-2.

According to an illustrative embodiment, the process workflow 116-1, 116-2 is defined by the service provider 138-1, 138-2, for instance by use of core service workflows which the service provider 138-1, 138-2 can access.

According to an illustrative embodiment of a service agnostic service system, the service implementation language can be defined by the service provider.

Delivery and removal of services may be performed in a similar manner as described above with regard to the deployment of a service. Herein, a message package may be provided similar to the message package 180 described with regard to Fig. 4B.

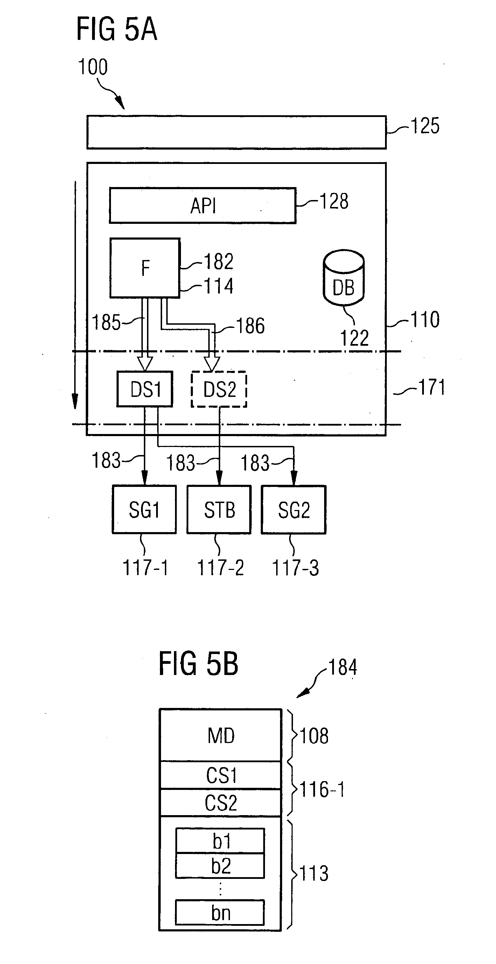

Fig. 5A shows a service system 100 according to further illustrative embodiments of the subject matter disclosed herein. The service system 100 of Fig. 5A provides a service related process, which is agnostic of delivery protocols. Hence, according to an embodiment, a service system 100 and in particular a service deployment platform is obtained which supports multiple service delivery protocols. Such a service system 100 may be in fact a protocol agnostic service system providing at least one protocol agnostic service related process. Exemplary use cases of a protocol agnostic, service related process are deployment and undeployment of a distribution service DS1, DS2. A distribution service DS1, DS2 manages delivery of software into a subsystem, e.g. into an end-user subsystem 117-1, 117-2, 117-3 such as a service gateway SG1, SG2 and a set top box STB. The delivery of software is indicated at arrows 183 in Fig. 5A.

Protocol agnostic service related process may be performed e.g. by an operator or by a service provider, or respective components thereof. An exemplary use case of a protocol agnostic service related process is the adding of a component into a subsystem, e.g. the operator's backend platform, that manages a delivery of software, e.g. executable components like binary files, into other subsystems, e.g. end-user subsystems like service gateways, set-top boxes, etc. Such a component added to the subsystem may be a protocol manager, e.g. a protocol manager that permits to deliver OSGi bundles into a service gateway. Another component which may be added to the subsystem may be an Xlet manager which permits to deliver Xlets into another subsystem, e.g. a set-top box.

The service system shown in Fig. 5A comprises a subsystem 110, which is an operator's backend in an illustrative embodiment, the subsystem 110 comprising an application programming interface (API) 128. The service system further comprises a front end 125 for inputting data into the API 128. According to an illustrative embodiment, the front end 125 may be an operator's front end. A single process handling component 182, e.g. a Backend Software Registry (BSR), of the subsystem 110 handles the processes and destination services that have been deployed and run in the subsystem 110. The handling of the distribution service DS1 in Fig. 1 is indicated at 185 in Fig. 5A. Further, the single process handling component deploys or undeploys destination services, e.g. deploys destination services DS2, indicated by arrow 186 in Fig. 5A. According to other embodiments, the subsystem may comprise two or more separate components which provide the functionality of the single process handling component 182. The process handling component 182 includes a workflow engine 114 for carrying out service related processes. The subsystem 110 further comprises a metadata storage 122 for storing and providing metadata of service related processes.

According to an embodiment, an operator or a service provider may provide a message package 184 through the API 128 to the process handling component 182. Fig. 5B schematically shows a message package 184 in accordance with illustrative embodiments of the subject matter disclosed herein. According to an illustrative embodiment, the message package 184 comprises metadata 108. According to another illustrative embodiment, the message package 184 comprises the core services CS1, CS2 that will run in the respective use cases, e.g. in adding or removing a distribution service DS1, DS2. For example, the core service CS1 may be "adding a destination service" and the core service CS2 may be "removing a destination service". A distribution service DS1, DS2 may be represented by a respective add-on workflow, respective metadata and respective executable components. According to an embodiment, each add-on flow calls one of the specific executable components which are specific to the destination service. According to an embodiment, the core services CS1, CS2 are represented by respective process workflows 116. The core services CS1, CS2 may run in the operators backend 110. According to other embodiments, the core services may run in other subsystems, e.g. in a service provider's infrastructure. According to an embodiment, the metadata 108 is stored and used by the core services CS1, CS2.

According to a further embodiment, the message package 184 comprises executable components 113, e.g. the destination services binaries, denoted as b1, b2, ..., bn in Fig. 5B. According to an embodiment, the executable components 113 are added to and run in the operators infrastructure, e.g. in the backend 110. According to another embodiment, the executable components 113 are added to and run in another subsystem, e.g. in a service provider's infrastructure (not shown). According to still another embodiment, the subsystem on which the executable components 113 run, e.g. the backend 110, simultaneously handles other processes e.g. OSGi bundles.

While in the above described example operator use cases have been described, it should be understood that according to other embodiments, use cases of a service provider may be treated in a similar way. Use cases of a service provider may be e.g. adding a subscribable service or removing a subscribable service.

According to an embodiment, the add-on workflow is defined by an operator or a service provider. Hence, the steps performed according to the add-on workflow are specified for each of the destination services DS1, DS2 in a dynamic style, indicated by the dotted rectangle of the distribution service DS2 in Fig. 5A.

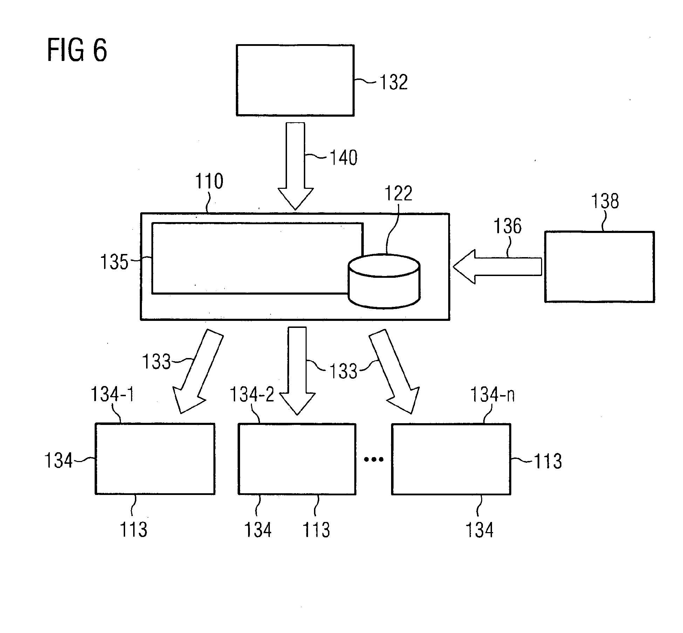

Fig. 6 shows in part a service system according to illustrative embodiments. In the service system shown in Fig. 6, the middleware 110 is responsible for deploying, indicated at 133, several software components into the corresponding protocol manager 134 according to a delivery protocol. Anytime a service is changed or subscribed, the middleware triggers all the corresponding protocol managers for the necessary actions. According to other embodiments, the triggering of the corresponding protocol managers is performed in predetermined time intervals, etc.

If new delivery protocols are needed by a specific service, a new protocol manager 134 is added to the service system 100. A protocol manager 134 is also an executable component 113 as discussed in detail with regard to Fig. 1 to 3, the description of which is not repeated here. A protocol manager is an executable component and a distribution service. The service system illustrated in part in Fig. 6 comprises n protocol managers, i.e. a protocol 1 manager 134-1, a protocol 2 manager 134-2 and a protocol n manager 134-n.

In addition to a new protocol manager 134, a new protocol adapter 120 for the workflow control system 135 to communicate with the respective protocol manager 134 may be provided. The service control system 135 may include a process workflow 116 and a workflow engine 114 as described above. Further, the middleware 110 may include metadata 108, stored in a metadata storage 122, e.g. a database. Further additional executable components 113 (not shown in Fig. 6) may be added to the service system that are referenced by a new workflow or that are extensions to a current state machine.

According to an embodiment of deploying 136 a service by a service provider 138, upon deploying 136 the service, a state-machine 126 is executed according to the information passed to it. The state-machine 126 might call the execution of other state machines 126 for deployment, if it is programmed to do so. Service related information may also be stored under this process, including one or more other state machines eventually required to subscribe the service. According to the type of applications passed within the service (GEM, OSGi, etc. or two or more of them), the state machine triggers the corresponding subcomponent, i.e. an executable component 113 responsible for processing such applications.

Upon service subscription 140 by a client 132, a respective state machine is executed in order to trigger each component to install applications at the client 132. The client 132 may be a remote device, such as a GEM application at home set-top boxes, OSGi bundles at home gateways, user interface plugins for PDA rich-clients, etc.

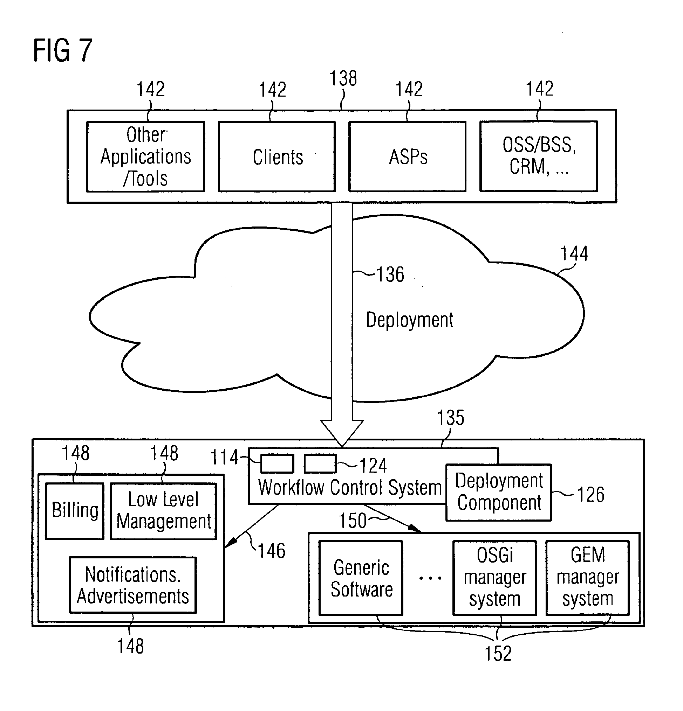

Having regard to Fig. 7, an embodiment of service deployment 136 is discussed in detail. Service deployment 136 is implemented as a standard process for all kinds of services. Hence this deployment process is service agnostic. The deployment process is started through an API invocation, e.g. a web service of a service provider 138 invoked by an operator or a carrier portal, and all information needed for the deployment is passed to the service deployment component, e.g. a workflow control system 135 running on the service enabling platform. The service provider 138 may deploy services for one or more service receiving entities 142 operations support systems (OSS), business support systems (BSS), Customer relationship management (CRM) systems, application service providers (ASP), clients, or any other applications/Tools. The deployment 136 may take place over Internet 144, over other telecommunications infrastructure, over wired or wireless networks, etc.

Upon reception of the information for the deployment via process 136, the workflow control system 135 performs its logic and then starts a workflow process described as a state machine 126, associate to the deployment action. This process may also execute 146 the remaining tasks 148 associated with the service deployment and will invoke 150 operations on other service enabling platform components 152 such as generic software, an OSGi manager system, a GEM manager system, etc. This deployment process 136 provides all the necessary information to correctly perform all remaining invocations.

As described previously, the workflow engine 114 may be provided with metadata 108 e.g. from a database 122. In particular, the workflow engine may have the database 122 to store all state machine definitions for all operations that are supported. One such state machine is for service deployment. The state machine for service deployment is started every time a service has to be deployed. The respective workflow must take all service information as an input and will pass this input to the executable components that are part of the process. In this sense, the executable components may be regarded as actors.

In an illustrated embodiment, the service information that is needed is:
- Billing Info: all billing information about the service
- Xlets: Software and related metadata for services implemented following GEM protocol
- Bundle details: Software and related metadata for services implemented following OSGi protocol
- Rich Client Details (RCDetails): Software and related metadata for the user interface plugins and their associations to user interface frameworks deployed into the platform.
- Extra Workflow Information: This is the information that specifies if a service needs extra actions when it is being subscribed. If at subscription time of a service, an external executable component must be contacted, then a workflow process definition must be supplied at this moment. Along with the extra process definition, this workflow information also has a jar file with the protocol adaptor classes (protocol mediator classes) that will allow the communication with the external executable component. Information about an extra deployment process will also be provided for a workflow process that will run at the end of the deployment process.

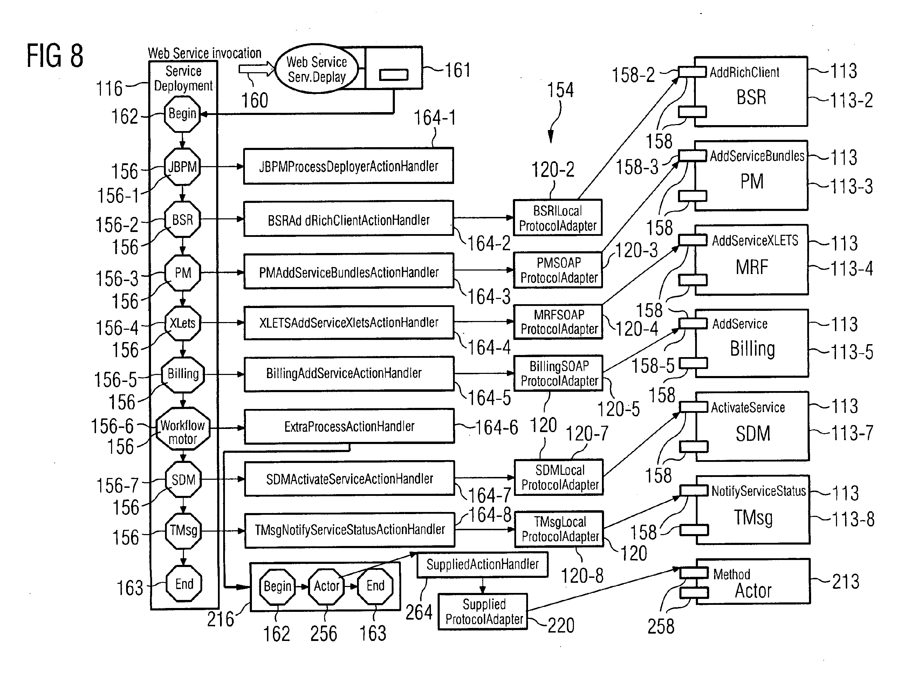

Fig. 8 schematically illustrates an embodiment of a service deployment process in the form of a respective process workflow 116. A workflow generally has an entry or starting point 162, e.g. an entry node and an end point 163, e.g. an end node. The service deployment process has several nodes 156 that will be visited during the execution defined in the process. Each node 156 may have associated therewith an executable component 113 providing one or more methods 158 to perform respective actions. Further, a node 156 may call another process workflow 216.

### The process workflow may be as follows:

After an web service invocation 160, and optional execution of initial functions 161, a service deployment workflow 116 is invoked in an entry point 162.

The first action is to go into a node 156-1 associated with workflow tasks. When entering this node, a handler 164-1, e.g. a JBPM Process deployment action handler, specified to handle the node 156-1 is invoked an the information is passed. The handler 164-1 will check if extra workflow information was supplied. If so, the extra process definition is saved in a workflow engine database (not shown in Fig. 8), the jar file containing the JAVA classes is deployed in the workflow engine server structure so that it can be accessed.

Next, the execution passes to the Backend Software Registry (BSR) node 156-2, the handler 164-2 associated to this node 156-2 will communicate with the respective actor 158 through the specific protocol mediator 120-2 and will pass the BSR information details to the backend software registry 113-2, invoking e.g. the method add-rich-client 158-2 as indicated in the illustrated example.

The execution will then jump into the Protocol Manager (PM) node 156-3, the handler 164-3 associated with this node will contact the protocol manager 113-3 through the specific protocol mediator 120-3 and will pass the OSGi bundle information to the protocol manager 113-3 invoking the method add-service-bundles 158-3.

Next, the execution will go into the Messaging and Repository Framework (MRF) node 156-4 and will contact the MRF 113-4 through the specific protocol mediator 120-4 in order to deploy the Xlets (MHP applications).

In the next step, the execution will enter the billing node 156-5 and the handler 164-5 associated to this node 156-5 will pass the billing information to the billing system 113-5, invoking the add-Service method 158-5. Again, this communication is performed through the respective protocol mediator 120-5 that is specified to be specific to the billing.

If an extra workflow name (process name) of an extra workflow 216 was specified in the deployment 136, upon entering an workflow engine node 156-6, handler 164-6 will invoke the workflow engine 114 (not shown in Fig. 8) to start an instance of that workflow 216 and starts the execution of the workflow 216 by entering an entry point 262. In a next step, an actor node 256 is entered and a respective action handler 264 associated with the actor node 256 will pass the respective information to an actor 213 through the respective protocol mediator 220.

After all these steps, the service is deployed in the backend infrastructure, but it cannot be subscribed by the users. Two extra steps are performed in order to give extra functionality to the deployment process. The first one is to contact the Service Delivery Manager (SDM) and invoke the activation of the service. This is by a jump into the Service Delivery Manager (SDM) node 156-7, the handler 164-7 associated with this node will contact the service delivery manager 113-7 through the specific protocol mediator 120-7 and will pass the respective information to the service delivery manager 113-7 invoking the method activate-service 158-7.

From this moment, the service is ready to be subscribed by users and the workflow can now perform the final step: The execution jumps to the target messaging node 156-8 and the respective handler 164-8 will contact a Target Messaging (TMsg) component 113-8 through the specified protocol mediator 120-8 to notify the service provider 138 that the service was deployed and is ready to subscription.

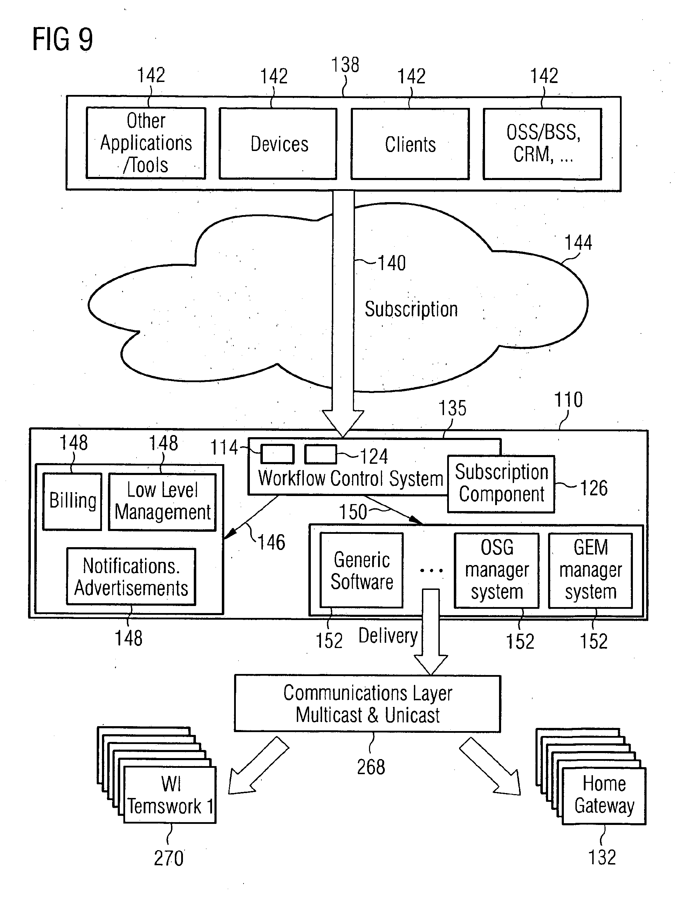

Having regard to Fig. 9, an embodiment of service subscription 140 is discussed in detail. Components identical with respective components of Fig. 7 are provided with the same reference numbers and the detailed description of these components is not repeated here.

Subscription for packages of services and hence the assignment of the packages is a standard process for all kinds of packages. The process is started through an API invocation and all the information needed for the subscription 140 is passed to a subscription component. This component then passes the gathered information into the state-machine representing the workflow process associated to the assignment operation.

Upon subscription, the workflow control system 135 triggers the proper components of the backend 110 to deliver the corresponding applications 152 according to a specific protocol to the clients 132, e.g. home gateways, remote devices or user interface frameworks 270 via a communication layer 268. The communication layer 268 may be a broadcast communication layer, a multicast communication layer or a unicast communication layer.

Although the subscription process is standard for all packages, it allows extra operations, e.g. external or internal actors communications in the case when the services need extra operations at subscription time. As mentioned before, that can be achieved because the service provider 138 the ability to specify this when he deploys the service in the infrastructure of the middleware platform 110.

As mentioned before, the workflow engine has the database 122 that stores all process definitions for all operations supported. There is one process called service subscription that is started every time a service has to be subscribed by a subscriber.

This workflow process must take some information as an input and that information will be used to be passed to the actors that are part of the process. According to an embodiment, the needed subscription information is:
- user ID: The identification of the user that is subscribing the package;
- package ID: The identification of the subscribed package;
- extra parameters: The extra information that the service provider must know to configure the service usage by the user.

This subscription information is passed to a workflow process 316 for service subscription created to perform the subscription of a service. This workflow process 316 has several nodes 356 that will be visited during the execution defined in the process. The service subscription workflow 316 has several nodes 356 that will be visited during the execution defined in the process. Each node 356 may have associated therewith an executable component 313 providing one or more methods 358 to perform respective actions. Further, a node 356 may call another process workflow 416.

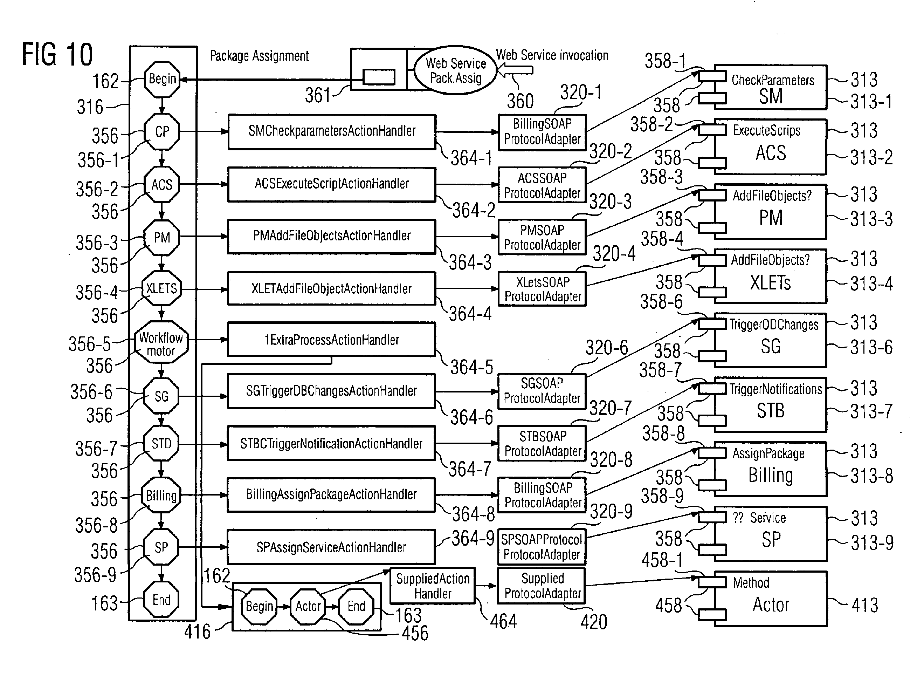

For an example illustrated in Fig. 10, the workflow will be as follows:

After an web service invocation 360, and optional execution of initial functions 361, a service subscription workflow 316 is invoked in an entry point 362.

The first action is to go into a node 356-1 where the parametes introduced by the user are verified - initiated by the respective handler 364-1, this verification is done by the subscription manager (SM) 313-1 through the proper protocol mediator 320-1 invoking the method check-parameters 318-1.

After this, the execution goes into an Auto-Configuration Server (ACS) node 356-2 and the respective handler 364-2, using the specified protocol mediator 364-2, will invoke a method execute-scripts 318-2 in the ACS 313-2 for low-level configurations of home gateways.

In the next step, the process execution resumes and it passes to the Protocol manager (PM) node 356-3, the handler 364-3 associated with this node will invoke an operation add-file-objects 318-3 in the PM 313-3 telling this component to install the service bundles in the specified user gateway if needed, i.e. this step is optional in the illustrated embodiment.
After this, the Xlets node 356-4 is reached and the XLetManager entity XLETs 313-4, which manages Xlets according to GEM delivery protocol, is informed by the respective handler 364-4 through the protocol mediator 320-4 that - if needed - it has to perform the Xlets installation on the client, e.g. a set-top box (STB), i.e. that it has to perform the method add-file-objects 313-4. This step is also optional in the illustrated embodiment.

After this, the execution will go into a workflow state machine node 356-5, the handler 364-5 associated with this node 356-5 will check if the services have extra workflow process definitions specified by the service providers 138. If so and in case this information was specified, the handler 364-5 will obtain the corresponding workflow processes 416 from the workflow engine database 122 and will start their execution. These extra processes will use the jar files deployed in the workflow engine 114 or in the service application server 112 and will use the protocol mediator 420 that it contains to perform their operations. The nodes 456 of these processes have handlers 464 deployed in the jar files. These handlers 464 use respective protocol mediators 420 that are also in the jar files. In this way, the handlers 464 will be able to communicate with external actors 413 and perform extra operations. This procedure is done for all services defined by the process workflow 418 that are part of the package, one of which is shown in Fig. 10.

When the executions of the extra processes ends, the standard service delivery process 316 resumes and goes into a home gateway (SG) node 356-6. Herein, the home gateway (SG) 313-6 is contacted by the respective handler 364-6 through the protocol mediator 320-6 in order to perform database (DB) synchronizations by invoking the method trigger-DB-changes 318-6. The trigger can also be raised by the Service Gateway.

Then the set-top box (STB) node 356-7 is reached and the set-top box (STB) 313-7 is contacted by the respective handler 364-6 through the protocol mediator 320-7 to invoke an operation trigger-notifications 318-7 in order to trigger notifications.

Next, the execution reaches a node 356-8 associated with Billing. This node will use the protocol mediator 320-8 specified to be used in billing communications and the respective handler 364-8 will invoke the method assign-package 318-8 to notify the billing engine 313-8 that the subscriber has subscribed this new package.

Finally, the execution goes to the service provider node 356-9, the handler 364-9 of this node 356-9 will use a protocol mediator 320-9 specified to allow the communications with the service providers 313-9 and it will pass them information about the new subscriber and the extra parameters that will configure the service usage by invoking the method subscribe-service 318-9. All service providers that have services in the subscribed package will be notified.

After execution of the subscription workflow 316, the service has been subscribed by the subscriber, the corresponding software has been delivered to the several devices according to the required protocol. Hence the subscribed service is ready to be used.

The above description illustrates that the proposed embodiment of the invention in the form of a new middleware architecture offers the following advantages:
- support for multiple delivery protocols;
- support for software delivery to multiple end devices (home gateways, mobile devices such as PDA's, etc.);
- flexibility: new protocols can be supported by adding extra states to the deployment state machine, and by adding as well an actor that implements the necessary business logic;
- dynamic inclusion of services according to multiple protocols - the deployment is agnostic to a service specific implementation details;
- no restrictions are placed on the protocol managers' implementation languages.

According to embodiments of the invention, any component of the service system, e.g. the middleware component 110 may be provided in the form of a respective computer program product which enables a processor to provide the functionality of the respective elements as disclosed herein. According to other embodiments, components of the service system may be provided in hardware. According to other - mixed - embodiments, some components may be provided in part in software and in part in hardware.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

In order to recapitulate the above described embodiments of the present invention one can state:

It is described a method of executing a service related process which comprises providing a process workflow defining said service related process, said process workflow specifying execution of at least one executable component. The method further comprises executing said process workflow with a workflow engine. According to illustrative embodiments, the process workflow may be service agnostic, i.e. agnostic of the service to which the process workflow is related and/or may be protocol agnostic i.e. agnostic of a specific protocol used by the service to which the process workflow is related. According to other illustrative embodiments, the process workflow describes core processes of a service system. Further it is described a service system comprising an executable component such as a binary or a script executable on the service system. The service system further comprises a service accessible by at least one client, wherein the service is defined by a respective process workflow and the process workflow defines execution of said executable component. The service system further includes a workflow engine capable of executing said process workflow to provide said service. By employing this workflow architecture, services may be deployed and delivered irrespective the particular implementation of the service. Service in this sense also includes the service of the deployment of a subscribable service or the service of the subscription of a subscribable service. Hence the service of deployment as well as the service of subscription of a particular subscribable service of interest may also performed by using the workflow architecture. Hence, embodiments of the invention offer the workflow architecture and the flexibility thereof on any level of deployment, subscription or other accessing of a service.

### List of reference signs:

- 100: service system
- 102: service
- 104: workflow description
- 106: executable component
- 108: metadata
- 110: middleware component
- 112: application server
- 113: executable component
- 113-1 to: 113-7: embodiments of executable components
- 114: flow engine
- 116: process workflow
- 117-1, 117-2, 117-3: : end user devices
- 125: front end
- 118: call to an application
- 120: protocol adaptor
- 120-1 to 120-7: : embodiments of protocol adaptors
- 122: database
- 124: component hand-over
- 125: front-end
- 126: state machine flow description
- 127: arrow indicating contents of the process workflow
- 128: application programming interface (API)
- 130: input
- 132: service subscribing device
- 133: deployment of software components
- 134, 134-1, 134-2, 134-n:: protocol manager
- 135: workflow control system
- 136: deployment of a service
- 138: service provider
- 138-1,: 138-2: service provider component
- 139-1,: 139-2: process information
- 140: service subscription
- 142: service receiving entities
- 144: internet
- 146: execution of remaining tasks
- 148: remaining tasks
- 150: invocation of operations on other service enabling platform components
- 151: communication connection
- 152: applications
- 154: deployment process
- 156: node
- 156-1 to 156-7:: several embodiments of nodes
- 158: method
- 158-1 to: 158-7: embodiments of methods
- 160: web service invocation
- 161: initial function
- 162: entry point
- 163: end point
- 164: handler
- 164-1 to: 164-7: embodiments of handlers
- 171: distribution service level
- 172: end-user service level
- 180-1,: 180-2: message package
- 181: service delivery manager
- 182: process handling component
- 183: delivery of software
- 184: message package
- 185: handling of a destination service
- 186: deployment of a destination service
- 213: actor as a form of an executable component
- 216: process workflow
- 220: protocol adaptor/mediator
- 256: actor node
- 258: method
- 264: handler
- 316: process workflow
- 313: executable component
- 313-1 to: 313-9 embodiments of executable components
- 320: protocol adaptor/mediator
- 320-1, to: 320-9 embodiments of protocol adaptors/mediators
- 356: node
- 356-1 to: 356-9 embodiments of nodes
- 358: method
- 358-1 to: 358-9 embodiments of methods
- 361: initial function
- 364-1 to: 364-9 embodiments of handlers
- 413: executable component
- 416: process workflow
- 420: protocol adaptor
- 456: node
- 458,: 458-1 methods
- 464: handler

## Claims

1. A method of executing a service related process, the method comprising:
- providing a process workflow (116, 216, 316, 416) defining said service related process, said process workflow (116, 216, 316, 416) specifying execution of at least one executable component (113, 213, 313, 413);
- executing said process workflow (116, 216, 316, 416) with a workflow engine (114).

2. The method of claim 1, wherein:
- providing said process workflow (116, 216, 316, 416) comprises providing a message package (180-1, 180-2, 184), the message package (180-1, 180-2, 184) comprising:
- said process workflow (116, 216, 316, 416); and
- metadata identifying said service related process.

3. The method of claim 2, wherein said message package (180-1, 180-2, 184) comprises at least one of said at least one executable component (113, 213, 313, 413).

4. The method of claim 1, wherein said service related process provides at least one of the following: adding to a service system a component (DS1, DS2) that manages delivery of software (183) into a sub-system (110, 138-1, 138-2, 117-1, 117-2, 117-3); adding to a service system a component (DS1, DS2) that manages removal of software from a sub-system (110, 138-1, 138-2, 117-1, 117-2, 117-3).

5. The method of claim 4, wherein
- at least one of said at least one executable component (113, 213, 313, 413) is a protocol manager (134) for providing at a predetermined protocol for transfer of said component; and
- said software delivered to said sub-system (117-1, 117-2, 117-3) is agnostic of an implementation of said protocol; and
- said software complies with said protocol.

6. The method of claim 1, wherein said service related process provides at least one of: adding to a service system a service that can be subscribed by subscribers; removal of a service from a service system; delivery of a service to a subscriber; removal of a service from a subscriber.

7. The method of claim 1, wherein the said service related process is agnostic of said service (ES1, ES1', ES1'', ES2, ES2', ES2'').

8. Computer program product which enables at least one processor to carry out the method according to claim 1.

9. Service system for providing a service, the system comprising:
- an executable component (113, 213, 313, 413);
- a process workflow (116, 216, 316, 416) defining a process related to said service and defining execution of said executable component (113, 213, 313, 413); and
- a workflow engine (114) capable of executing said process workflow (116, 216, 316, 416) to provide said service related process.

10. The method of claim 9, wherein said service related process provides at least one of the following: adding to a service system a component that manages delivery of software into a sub-system; adding to a service system a component that manages removal of software from a sub-system; adding to a service system a service that can be subscribed by subscribers; removal of a service from a service system; delivery of a service to a subscriber; removal of a service from a subscriber.

11. The system of claim 9, wherein the executable component (113, 213, 313, 413) is a protocol manager providing a predetermined delivery protocol for delivering said service to said client.

12. The system of claim 9, wherein said service related process is agnostic of said executable component (113, 213, 313, 413).

13. The system of claim 9, wherein said service related process is agnostic of said service (ES1, ES1', ES1'', ES2, ES2', ES2'').
